# EUROPEAN PATENT APPLICATION

(11) **EP 4 734 313 A1**
(43) Date of publication of application: **29.04.2026**
(21) Application number: 24208651.0
(22) Date of filing: 24.10.2024
(51) Int. Cl.: H02J 3/00, H02J 3/18, H02J 3/32

(54) **METHOD FOR OPERATING A CONVERTER UNIT, A CONTROL UNIT AND A POWER GRID SYSTEM**

(71) Applicant: Hitachi Energy Ltd, 8050 Zürich (CH)
(72) Inventor: Zhang, Hongyang, 115 24 Stockholm (SE); Rivas, Richard, 724 82 Västerås (SE); Hasler, Jean-Philippe, 722 44 Västerås (SE); Heydari, Rasool, 722 12, Västerås (SE); Danielsson, Christer, 725 91 Västerås (SE)
(74) Representative: AWA Sweden AB

(57) **Abstract**

There is disclosed herein a method for operating a converter unit (10) of a STATCOM (4), configured to be connected to a power grid (2) connected to at least one voltage flicker source (6). The method comprises determining (110) a grid-forming reference based on an active power (110a) and/or an energy level (110b) of the STATCOM, determining (120) a grid-following reference based on a reactive power (120a) and/or a voltage (120b) of the power grid. The method further comprises obtaining (130) a first current reference value by subjecting (125) the grid-forming reference and the grid-following reference to a mathematical operation and subjecting the result thereof to a virtual admittance, determining (140) a second current reference value based on a current at the voltage flicker source, and obtaining (150) a current reference, for controlling the converter unit, based on the first current reference value and the second current reference value. There are also disclosed herein a control unit and a power grid system.

## Description

### Technical background

The present disclosure generally relates to a method for operating a converter unit of a static synchronous compensator, STATCOM, configured to be connected to a power grid. The present disclosure further relates to a control unit configured to perform said method and a power grid system.

### Background

Renewable energy sources, such as wind and solar power, offer significant environmental benefits by reducing greenhouse gas emissions and phasing out fossil fuels. However, transitioning to such renewable energy sources degrades both voltage and frequency stability of the power system to which these renewable energy sources are connected. To ensure the stability of the power system, active and reactive power support is usually required. The reactive power support may be provided by static synchronous compensators (STATCOMs) and the active power support may be provided by equipping the STATCOM with an energy storage. The STATCOMs are mostly based on the use of modular multilevel converters for connecting the STATCOM to the power grid.

Conventional synchronous generator-based power systems have high short-circuit levels (SCLs), and the STATCOM controllers are therefore designed to be connected to a strong power grid using synchronization control. The synchronization control is based on the phase-locked loop, which tracks the phase angle of the voltage at the point of common coupling and could be referred to as grid-following control. However, a difficulty is that the transition towards renewable energy sources results in power grids with lower SCLs while the STATCOMs have not been designed for power grids with low SCL.

Therefore, it has been suggested that instead of 'following' the grid, the STATCOMs shall also contribute to 'forming' and stabilizing the grid, even under extreme weak-grid conditions. Therefore, the STATCOMs have started to implement grid-forming control.

However, there is a need of new control methods for converters in STATCOMs with improved voltage flicker mitigation that are robust in weak power grids as well as in strong power grids.

### Summary

It is therefore an object of the present disclosure to provide a method for operating a a converter unit of a static synchronous compensator, STATCOM, that alleviates at least part of the above-mentioned drawbacks. It is for example an object of the present disclosure to provide an improved voltage flicker mitigation for power grids. Further, it is an object of the present disclosure to provide a robust power grid system which is robust in both weak power grids and strong power grids. Further objects of the present disclosure are to provide a control unit which implements the method and a power grid system comprising said control unit.

According to a first aspect of the present disclosure, a method for operating a converter unit of a static synchronous compensator, STATCOM, is provided. The STATCOM is configured to be connected to a power grid connected to at least one voltage flicker source. The method comprises determining a grid-forming reference based on an active power of the power grid and/or an energy level of the STATCOM, and determining a grid-following reference based on a reactive power of the power grid and/or a voltage of the power grid. The method further comprises obtaining a first current reference value by subjecting the grid-forming reference and the grid-following reference to a mathematical operation and subjecting the result thereof to a virtual admittance, determining a second current reference value based on a current at the voltage flicker source, and obtaining a current reference, for controlling the converter unit, based on the first current reference value and the second current reference value.

According to a second aspect of the present disclosure, a control unit of a converter unit in a static synchronous compensator, STATCOM is provided. The STATCOM is configured to be connected to a power grid connected to at least one voltage flicker source. The control unit is configured to perform the method according to the first aspect.

According to a third aspect of the present disclosure, a power grid system is provided. The power grid system comprises at least one voltage flicker source being connected to a power grid, and a static synchronous compensator, STATCOM comprising a converter unit being configured to connect the STATCOM to a power grid. The converter unit comprises a control unit according to the second aspect.

The voltage flicker sources, such as non-linear loads and non-linear generators, introduce voltage flicker to the power grid. Examples of non-linear loads may be arc furnaces and data centers, and an example of non-linear generators is a wind turbine generator. Voltage flicker may result in malfunctions of equipment, reduce the lifespan of electrical devices, and increase maintenance costs. Voltage flicker may also contribute to grid instability, affecting the reliability of power distribution. By determining the second current reference value based on a current at the voltage flicker source, the converter unit of the STATCOM may be controlled to mitigate the voltage flicker generated from the voltage flicker source. In other words, the voltage flicker mitigation from the STATCOM will be based on information from the voltage flicker source and an expected effect that this voltage flicker source will have on the power grid. The input from the voltage flicker source allows the converter unit of the STATCOM to start mitigating the voltage flicker more effectively compared to conventional methods where only inputs from the power grid are provided. Thereby, the STATCOM of the present disclosure has better performance to mitigate voltage flicker.

A further challenge with the increasing penetration of renewable energy in power systems is that the short-circuit level is reduced, resulting in power grids with low short-circuit levels. The method of the present disclosure provides a grid-forming control which allows to support the power grid. Grid-forming control is used to support the power grid towards a desired value of the frequency and voltage, instead of following the frequency and voltage of the power grid which is the case in grid-following control. The method disclosed herein combines grid-forming control with grid-following control, thereby utilising both types of control and the advantages thereof. The grid-following reference is based on the voltage and/or the reactive power of the power grid which are parameters used for grid-following control. The grid-forming reference is based on the active power of the power grid and/or the energy level of the STATCOM, which are parameters used for grid-forming control.

The grid-following reference and the grid-forming reference are subjected to a mathematical operation, in particular an addition, and the result thereof (i.e. the sum, if the operation is an addition) is then subjected to a virtual admittance to obtain the first current reference value. As mentioned, the mathematical operation may be to add the grid-forming reference and the grid-following reference into one reference value, i.e., the value subjected to the virtual admittance to obtain the first current reference value. However, it is still possible to differentiate between active power and reactive power in the first current reference value and therefore the first current reference value serves as grid-forming. The first current reference value may for example be in p and q frames, to differentiate between active power and reactive power. The current at the voltage flicker source provides a grid-following reference value. The current at the voltage flicker source is transformed to the second current reference value to be compatible with the first current reference value. The second current reference value may serve to compensate for the voltage flicker source. The current reference for controlling the converter unit is based on both the first current reference value and the second current reference value and is grid-forming. The current reference with grid-forming characteristics may be seen as voltage-dependent. The STATCOM and the voltage flicker source may together be seen as a grid-forming plant. The present disclosure provides a method that provides grid-forming control. Thus, the method is more robust in both weak power grids as well as strong power grids. Further, this allows the method to be used in an islanded power grid.

Virtual admittance is used to emulate the behavior of physical admittance and is commonly used in control systems to mathematically receive a current reference from a voltage reference. This is achieved by multiplying the voltage reference with the virtual admittance. Further, the virtual admittance provides some degrees of cross-coupling between active power and reactive power. Cross-coupling of the active power and the reactive power enhances the stability of the power system due to the enhanced voltage regulation and power flow management.

The second current reference value is based on a current at the voltage flicker source. The current at the voltage flicker source may be measured either directly at the voltage flicker source, or at a bus connecting the voltage flicker source to the power grid, or anywhere between the bus and the voltage flicker source.

The method is an iterative process in which the inputs from the grid-forming reference, grid-following reference, and the second current reference value are continuously updated in response to changes in the grid's voltage, active power, and reactive power, as well as the current at the voltage flicker source. As these grid parameters fluctuate over time, the control unit dynamically adjusts the references to maintain stable operation and ensure optimal power quality.

It should be understood that the grid-forming reference and the grid-following reference may be any type of reference value, for example a grid-forming voltage reference and a grid-following voltage reference. However, the grid-forming reference and the grid-following reference may also be other types of references that at a later stage are converted to voltage references. The grid-forming reference and the grid-following reference should be understood as reference values.

The current reference may be a result of a mathematical operation based on the first current reference value and the second current reference value. The current reference may be obtained as a result of the mathematical operation based on the first current reference value and the second current reference value such that the first current reference value and the second current reference value are summed into one reference value.

The STATCOM is connected to the power grid at a bus or a connection point. Generally, the active power, reactive power and voltage used for the grid-forming reference and the grid-following reference are measured at this bus or connection point.

The STATCOM may further comprise an energy storage system. STATCOMs may be equipped with energy storage systems to enhance their active power support and improve response times. Energy storage systems provide rapid, reliable compensation for grid disturbances, increasing the flexibility and overall effectiveness of the STATCOM. This integration may help maintain grid stability and reliability by allowing the system to deliver quick adjustments and additional support during high demand or variable conditions. Further, this provides the STATCOM with the possibility to absorb and inject active power from/to the power grid.

The method may further comprise subjecting the result of the mathematical operation based on the grid-forming reference and the grid-following reference to a decoupler prior to the virtual admittance. The decoupler improves the control performance by mathematically (or algorithmically) decoupling the active power and reactive power. The decoupler ensures that changes in one of the grid-forming reference and the grid-following reference do not adversely affect the other, such as, for example, that a change in the active power affects the reactive power. In other words, the decoupler operates by creating a framework where control loops operate as if they were isolated from each other, even though they are physically interconnected. Thus, the cross-coupling effects between active power and reactive power may be decoupled and the active power and reactive power separated and isolated from each other.

The second current reference value may be determined by subjecting the current at the voltage flicker source to a voltage flicker balancer controller. The current at the voltage flicker source is used as an input to the voltage flicker balancer controller, which processes the current to receive the second current reference value. The voltage flicker balancer may comprise a virtual admittance to which the current at the voltage flicker source may be subjected.

The voltage flicker balancer controller may subject the (measured) current to different types of filtering/controller for providing the second current reference value. The voltage flicker balancer controller may also be seen as a grid-following controller. The result of the mathematical operation based on the grid-forming reference and the grid-following reference may result in an internal source voltage which is subjected to the virtual admittance to determine the first current reference value. The result of the mathematical operation based on the grid-following reference and the grid-forming reference creates the internal source voltage where the active power and the reactive power are cross-coupled. The internal source voltage may then be subjected to both the decoupler and the virtual admittance to obtain the first current reference value. The voltage flicker balancer may transform the measured current into p and q frames used in the second current reference which is configured to compensate for the reactive power disturbance from the voltage flicker source.

The grid-forming reference and the grid-following reference may be a grid-forming voltage reference and a grid-following voltage reference. The grid-forming voltage reference may be the output from grid-forming control of the control unit. In other words, the control unit may comprise a grid-forming controller that output the grid-forming voltage reference from the input of the active power and/or the energy level of the STATCOM. The grid-following voltage reference may be the output from grid-following control of the control unit. In other words, the control unit may comprise a grid-following controller that outputs the grid-following voltage reference from the input of the reactive power and/or the voltage.

The grid-forming reference may be obtained from an active power controller and/or an energy controller. The grid-forming controller may also be seen as the active power controller and/or the energy controller. In other words, the grid-forming controller may be either one of the active power controller and the energy controller, or a combination of both the active power controller and the energy controller.

The grid-following reference may be obtained from a reactive power controller and/or a voltage controller. The grid-following controller may also be seen as the reactive power controller and/or the voltage controller. In other words, the grid-following controller may be either one of the reactive power controller and the voltage controller, or a combination of both the reactive power controller and the voltage controller.

The method may further comprise obtaining a voltage reference through vector current control and based on the current reference. The current reference may be used as input for the vector current control and used for matching the actual current of the converter unit to the current reference. The vector current control outputs a voltage reference which is used to control the switching of the converter unit to regulate the current and achieve the desired power flows. In other words, the current reference is used to set the target for the vector current control, and the voltage reference is the output that drives the switching of the converter unit to regulate currents and power output. The vector current control allows the method to precisely regulate the currents in a three-phase AC system by controlling them as independent components. The vector current control enables fast and accurate management of active power and reactive power. Vector current control may further be advantageous as it ensures that the regulated current follows the current reference.

The STATCOM and said at least one voltage flicker source may be connected to the power grid via a respective transformer. The STATCOM and voltage flicker source may not operate at the standardised voltage levels of the power grid and may therefore require a transformer to step up or down the voltage to match the voltage levels of the power grid, thereby ensuring a smoother power transfer. Further, the transformers provide improved electrical isolation and fault protection for the connected equipment (STATCOM or voltage flicker source) from faults in the power grid. As STATCOMs manage reactive power and voltage stability in the power grid, transformers may help with regulating the interaction between the STATCOM and the power grid.

Effects and features of the second aspect and the third aspect may be largely analogous to those described above in connection with the first aspect. Embodiments mentioned in relation to the first aspect may be at least largely compatible with the second aspect and the third aspect. It is further noted that the present disclosure relates to all possible combinations of features unless explicitly stated otherwise.

A further scope of applicability of the present disclosure will become apparent from the detailed description given below. However, it should be understood that the detailed description and specific examples, while indicating preferred embodiments of the disclosure, are given by way of illustration only, since various changes and modifications within the scope of the disclosure will become apparent to those skilled in the art from this detailed description.

Hence, it is to be understood that the present disclosure is not limited to the particular parts of the method, control unit and power grid system described herein. It is also to be understood that the terminology used herein is for the purpose of describing particular embodiments only, and it is not intended to be limiting.

### Brief description of the drawings

The above and other aspects of the present disclosure will now be described in more detail, with reference to the appended figures, wherein:
- Fig. 1: schematically shows an overview of a power grid system.
- Fig. 2: schematically shows a method for controlling a converter unit of a STATCOM.
- Fig. 3: schematically shows a flow scheme of the method.

### Detailed description

The present disclosure is described in the following by way of a number of illustrative examples. It will be appreciated that these examples are provided for illustration and explanation only and are not intended to be limiting on the scope of the disclosure.

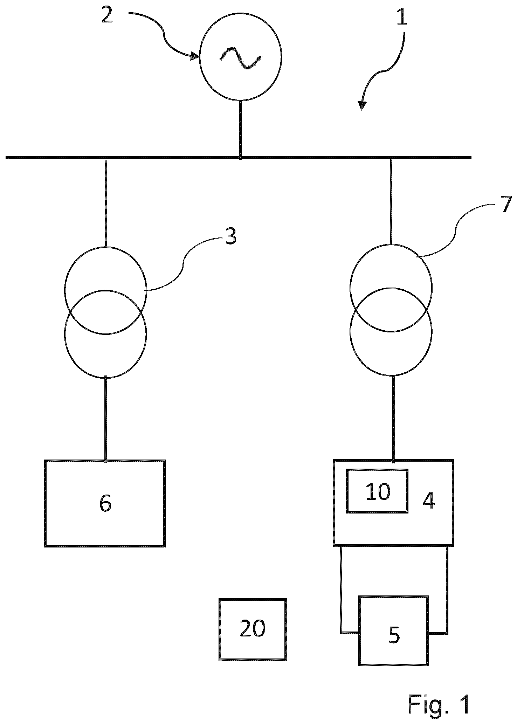

Fig. 1 discloses an exemplifying embodiment of a power grid system 1. The power grid system 1 connects the power grid 2 to a static synchronous compensator, STATCOM, 4 and to a voltage flicker source 6. In other embodiments there may be more than one voltage flicker source 6. Further, the power grid system 1 may include a plurality of STATCOMs 4, where each STATCOM 4 is connected to one or more voltage flicker source 6.

The STATCOM 4 and the voltage flicker source 6 are connected to the power grid 2 via a respective transformer 3, 7. The power grid 2 often operates at standardised voltage levels. These voltage levels are often not optimal for the STATCOM 4 and/or the voltage flicker source 6. Therefore, transformers 3, 7 may be used to step up or down the voltage to match the voltage levels of the power grid 2. Further, the transformers 3, 7 may be used to electrically isolate the STATCOM 4 or the voltage flicker source 6 from the power grid.

The voltage flicker source 6 should be understood as a non-linear load or as a non-linear generation source or any type of source that introduces voltage flicker to the power grid 2. Examples of non-linear loads may be arc furnaces and data centers, and examples of non-linear generation source are a wind turbine generator, a wind turbine plant, or a transmission cable connecting the wind turbine plant to the power grid.

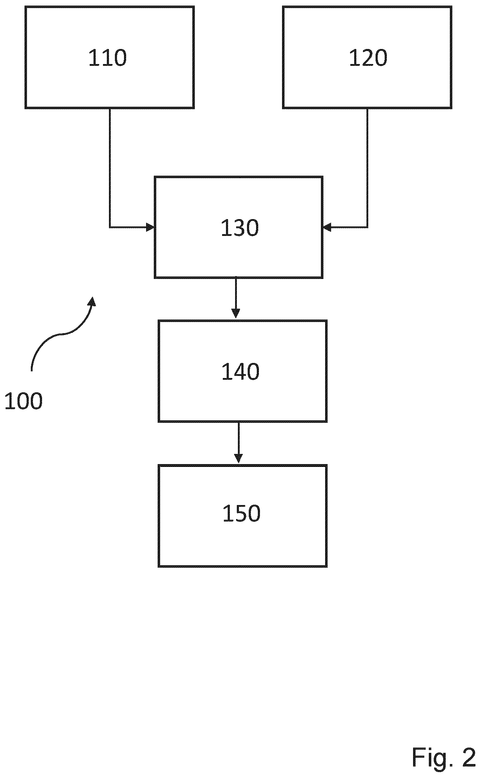

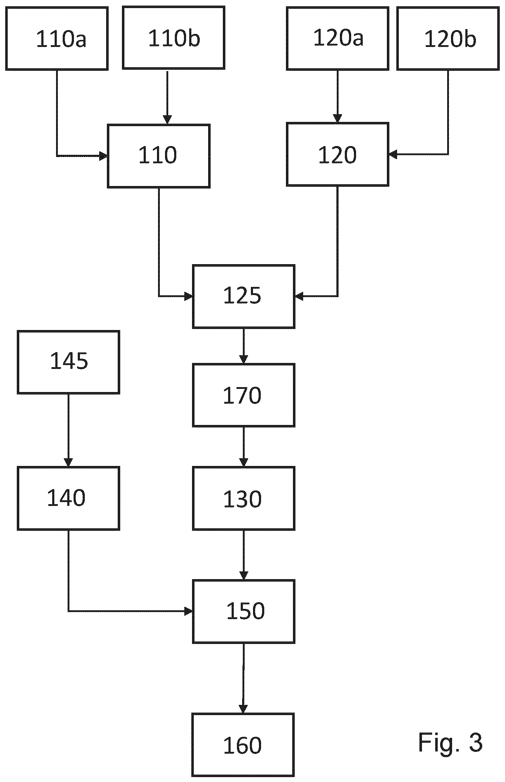

The STATCOM 4 comprises a converter unit 10. The converter unit 10 connects the STATCOM 4 to the power grid 2. The converter unit 10 allows the STATCOM 4 to inject or absorb active power by adjusting the phase and amplitude of the AC voltage. The converter unit 10 of the STATCOM 4 comprises a control unit 20 which is configured to control the operation of the converter unit 10. The control unit 20 is further configured to perform the method 100 that will be further described in connection to Figs. 2 and 3.

The STATCOM 4 further comprises an energy storage system 5. The energy storage system 5 stores energy through for example supercapacitors or batteries.

In Fig. 2, an overview of the method 100 is illustrated. In Fig. 3, a flow scheme illustrates how the method 100 could be implemented.

Figs. 2 and 3 illustrate a method 100 for operating the converter unit 10 of the STATCOM 4, for example the converter unit 10 in the power grid system 1 described in connection to Fig. 1, where the power grid system 1 comprises at least one voltage flicker source 6. Figs. 2 and 3 will in the following sections be described together.

The method 100 comprises determining 110 a grid-forming reference based on an active power 110a of the power grid 2 and/or an energy level 110b (also referred to as energy 110b in the following) of the STATCOM 4.

The grid-forming reference may be obtained from an active power controller and/or an energy controller. The active power controller and the energy controller provide a type of grid-forming controller configured to support the power grid towards a desired value of the frequency and the voltage. Active power 110a of the power grid 2 and energy 110b of the STATCOM 4 are parameters used in grid-forming control. The grid-forming reference may be determined 110 based on one of the active power control and the energy control, or on a combination of said two.

The method 100 further comprises determining 120 a grid-following reference based on a reactive power 120a of the power grid and/or a voltage 120b of the power grid.

The grid-following reference may be obtained from a reactive power controller and/or a voltage controller. The reactive power controller and the voltage controller provide a type of grid-following controller configured to follow the frequency and voltage of the power grid. Reactive power 120a of the power grid 2 and voltage 120b of the power grid 2 are parameters used in grid-following control. The grid-following reference may be determined 120 based on one of the reactive power control and the voltage control, or on a combination of both.

It should be understood that the grid-forming reference and the grid-following reference may be any type of reference value, for example a grid-forming voltage reference and a grid-following voltage reference. However, the grid-forming reference and the grid-following reference may also be other types of references that at a later stage are converted to voltage references.

The STATCOM 4 is connected to the power grid 2 at a bus or a connection point (not shown). Generally, the active power 110a, reactive power 120a and voltage 120b used for the grid-forming reference and the grid-following reference are measured at this bus or connection point and provided to the control unit 20. However, the active power 110a, reactive power 120a and voltage 120b may also be measured at a remote bus of the power grid 2, which is farther away from the substation where the STATCOM is installed.

The method 100 further comprises obtaining 130 a first current reference value by subjecting 125 the grid-forming reference and the grid-following reference a mathematical operation and subjecting the result thereof to a virtual admittance.

The grid-following reference and the grid-forming reference is summed through mathematical operations and subjected to a virtual admittance to obtain the first current reference value. Mathematical operations are used to add the grid-forming reference together with the grid-following reference into one reference value, i.e., a value which is then subjected to the virtual admittance to obtain the first current reference value. The result of the mathematical operations on the grid-forming reference and the grid-following reference may be seen as forming an internal source voltage where the active power and the reactive power are cross-coupled.

To limit the cross-coupling effects, the method 100 may further comprise subjecting 170 the result of the mathematical operation based on the grid-forming voltage reference and the grid-following voltage reference to a decoupler prior to the virtual admittance. The decoupler 170 improves the control performance by mathematically (or algorithmically) separating and isolating the active power and reactive power to prevent interference between them. In other words, the decoupler operates by creating a framework where control loops operate as if they were isolated from each other, even though they are physically interconnected.

Virtual admittance is used to emulate the behavior of physical admittance and is used to mathematically obtain a current reference, the first current reference value, from a voltage reference. For obtaining the first current reference value, the voltage reference is obtained from the grid-forming reference and the grid-following reference, and it is then multiplied with the virtual admittance.

The method 100 further comprises determining 140 a second current reference value based on a current at the voltage flicker source 6. The second current reference value may be seen as a grid-following reference value.

The second current reference value is based on a current at the voltage flicker source 6. The current at the voltage flicker source may be measured 145 either directly at the voltage flicker source 6, or at a bus (not shown) connecting the voltage flicker source 6 to the power grid 2. In other words, the current at the voltage flicker source 6 may be continuously measured at the voltage flicker source 6, to provide updates of how the current fluctuates.

The second current reference value may be determined 140 by subjecting the current at the voltage flicker source to a voltage flicker balancer controller. The current at the voltage flicker source 6 is used as an input to the voltage flicker balancer controller, which processes the current to receive the second current reference value.

The current may be continuously measured 145 and used as an input to a voltage flicker balancer controller. The voltage flicker balancer controller may subject the (measured) current to different types of filtering/controller for providing the second current reference value. The voltage flicker balancer controller may also be seen as a grid-following controller.

The method 100 further comprises obtaining 150 a current reference, for controlling the converter unit 10, based on the first current reference value and the second current reference value. The current reference may be obtained through mathematical operations on the first current reference value and the second current reference value such that the first current reference value and the second current reference value are added together into one reference value, i.e., the current reference.

By determining 140 the second current reference value based on a current at the voltage flicker source 6, the converter unit 10 of the STATCOM 4 may be controlled to mitigate the voltage flicker generated from the voltage flicker source 6 before the voltage flicker affects the power grid 2. In other words, the voltage flicker mitigation from the STATCOM 4 will be based on information from the voltage flicker source 6, i.e., the current at the voltage flicker source, and an expected impact this voltage flicker source 6 would have on the power grid 2.

The method 100 should be understood as an iterative process where the inputs from the grid-forming reference, grid-following reference, and the second current reference value are continuously updated in response to changes in the power grid's 2 voltage 120b, active power 110a, and reactive power 120a, as well as the current at the voltage flicker source 6. As these grid parameters fluctuate over time, the control unit dynamically adjusts the references to maintain stable operation and ensure optimal power quality.

The method 100 may further comprise obtaining 160 a voltage reference through vector current control and based on the current reference. The current reference may be used as input for the vector current control and is used for matching the actual current of the converter unit 10 to the current reference. The vector current control outputs a voltage reference which is used to control the switching of the converter unit 10 to regulate the current and achieve the desired power flows. In other words, the current reference is used to set the target for the vector current control, and the voltage reference is the output that drives the converter unit 10 to achieve the correct currents and power output. The vector current control allows the method to precisely regulate the currents in a three-phase AC system by controlling them as independent components.

While the present disclosure is susceptible to various modifications and alternative forms, specific examples are shown and described in relation to the drawings, with a view to clearly explaining the various advantageous aspects of the present disclosure. It should be understood, however, that the detailed description herein and the drawings attached hereto are not intended to limit the disclosure to the particular form disclosed. Rather, the intention is to cover all modifications, equivalents, and alternatives falling within the scope of the following claims, including the possible combination of various elements of these specific examples.

## Claims

1. A method for operating a converter unit (10) of a static synchronous compensator, STATCOM (4), configured to be connected to a power grid (2) connected to at least one voltage flicker source (6), the method comprising;
determining (110) a grid-forming reference based on an active power (110a) of the power grid and/or an energy level (110b) of the STATCOM,
determining (120) a grid-following reference based on a reactive power (120a) of the power grid and/or a voltage (120b) of the power grid,
obtaining (130) a first current reference value by subjecting (125) the grid-forming reference and the grid-following reference to a mathematical operation and subjecting the result thereof to a virtual admittance,
determining (140) a second current reference value based on a current at the voltage flicker source, and
obtaining (150) a current reference, for controlling the converter unit, based on the first current reference value and the second current reference value.

2. The method according to claim 1, further comprising subjecting (170) the result of the mathematical operation based on the grid-forming reference and the grid-following reference to a decoupler prior to the virtual admittance.

3. The method according to claim 1 or 2, wherein the second current reference value is determined by subjecting the current at the voltage flicker source to a voltage flicker balancer controller.

4. The method according to any one of the preceding claims, wherein the result of the mathematical operation based on the grid-forming reference and the grid-following reference results in an internal source voltage which is subjected to the virtual admittance to determine the first current reference value.

5. The method according to any one of the preceding claims, wherein the grid-forming reference and the grid-following reference are a grid-forming voltage reference and a grid-following voltage reference.

6. The method according to any one of the preceding claims, wherein the grid-forming reference is obtained from an active power controller and/or an energy controller.

7. The method according to any one of the preceding claims, wherein the grid-following reference is obtained from a reactive power controller and/or a voltage controller.

8. The method according to any one of the preceding claims, further comprising obtaining (160) a voltage reference through vector current control and based on the current reference.

9. The method according to any one of the preceding claims, wherein the current reference is a result of a mathematical operation based on the first current reference value and the second current reference value.

10. A control unit (20) of a converter unit (10) in a static synchronous compensator, STATCOM (4) configured to be connected to a power grid (2) connected to at least one voltage flicker source (6),
wherein the control unit is configured to perform the method according to any one of the preceding claims.

11. A power grid system (1) comprising;
at least one voltage flicker source (6) being connected to a power grid, and
a static synchronous compensator, STATCOM (4) comprising a converter unit (10) being configured to connect the STATCOM to a power grid,
wherein the converter unit comprises a control unit (20) according to claim 10.

12. The power grid system according to claim 11, wherein the STATCOM further comprises an energy storage system.

13. The power grid system according to claim 11 or 12, wherein the STATCOM and said at least one voltage flicker source are connected to the power grid via a respective transformer (3, 7).
